# FASCICULE DE BREVET EUROPEEN

(11) **EP 1 230 081 B1**
(45) Date de publication et mention de la délivrance du brevet: **05.11.2003**
(21) Numéro de dépôt: 00962483.4
(22) Date de dépôt: 11.09.2000
(51) Int. Cl.: B32B 17/10, C09K 21/04

(54) **VITRAGE COUPE-FEU TRANSPARENT**
TRANSPARENTE BRANDSCHUTZVERGLASUNG
TRANSPARENT FIRE BREAK GLAZING

(30) Priorité: 16.09.1999 BE 9900619
(43) Date de publication de la demande: 14.08.2002
(73) Titulaire: GLAVERBEL, B-1170 Bruxelles (BE)
(72) Inventeur: GOELFF, Pierre, B-6120 Nalinnes (BE); MERTENS, Guy, B-5020 Vedrin (BE); DALLENOGARE, Xavier, B-1380 Sauvagemont (BE); GHODSI, Mehdi, B-1170 Bruxelles (BE)
(74) Mandataire: Le Vaguerèse, Sylvain Jacques
(86) Numéro de dépôt international: EP0008948
(87) Numéro de publication internationale: WO01019608

(56) Documents cités:
- EP-A- 0 056 267
- WO-A-99/19422
- US-A- 3 917 546
- US-A- 4 246 169
- US-A- 4 503 004

## Description

L'invention est relative aux vitrages coupe-feu comportant un matériau intumescent aux propriétés améliorées.

Les vitrages coupe-feu de ce type peuvent conduire à l'utilisation de différents matériaux. Le choix des matériaux intumescents conditionne de façon significative non seulement les caractéristiques thermiques des vitrages, mais aussi les techniques de production de ces vitrages qui sont un des éléments importants notamment de leur prix de revient.

Les produits demandés par les utilisateurs doivent présenter des propriétés toujours plus performantes. En particulier les vitrages doivent avoir une tenue au feu de plus en plus longue dans des conditions de température toujours plus sévères. Pour satisfaire ces nouvelles demandes, les producteurs de tels vitrages ont proposé notamment l'utilisation de nouveau matériaux intumescents résistant mieux à des températures très élevées. Dans l'évaluation de la résistance de ces matériaux, un élément significatif est la température à laquelle, dans les cycles d'essai au feu, postérieurement à la formation de la mousse, le matériau intumescent fond ou s'effondre. A cette transformation du matériau correspond la perte de ses propriétés isolantes. Si les matériaux intumescents les plus usuels, à base de silicates alcalins hydratés, se transforment à une température de l'ordre de 400 à 500°C, d'autres matériaux permettent d'atteindre et dépasser 700°C.

Parmi les matériaux conduisant à des mousses résistant aux températures les plus élevées, les compositions contenant des phosphates sont celles qui semblent le mieux répondre à ces nouvelles demandes. Des matériaux de ce type ont fait l'objet de publications de brevets, notamment WO 99/19422 au nom de la demanderesse.

En dehors de leur résistance thermique accrue, les matériaux intumescents de ce type se distinguent des compositions à base de silicates mis en oeuvre le plus habituellement, par leurs propriétés rhéologiques et leurs conditions de mise en oeuvre qui découlent de celles-ci. En particulier ces compositions à base de phosphates gélifient dans des conditions très spécifiques, et n'offrent pas toujours la stabilité requise dans les épreuves de choc thermique. La difficulté principale est la tendance des matériaux intumescents à base de phosphates de fluer sous l'effet de la chaleur à des températures inférieures à celles de formation de la mousse.

On comprend que l'efficacité des vitrages coupe-feu exige que chacun de leurs constituants joue convenablement son rôle. Le matériau intumescent intervient de diverses façons. Il absorbe une partie de la chaleur reçue par le vitrage en vaporisant l'eau d'hydratation qu'il renferme. Il forme aussi un écran à la conduction et au rayonnement thermiques par la mousse opaque qu'il forme à l'évaporation de cette même eau. Enfin, le matériau maintient les feuilles de verre en position même après que celles-ci aient été brisées par le choc thermique. Si le matériau s'élimine par fluage avant de donner lieu à la formation de mousse, il ne peut jouer aucun de ces rôles essentiels au bon fonctionnement des vitrages coupe-feu.

Pour accroître la tenue au feu des vitrages, un moyen couramment mis en oeuvre consiste à multiplier les feuilles de verre et les couches intercalaires intumescentes. Le principe est d'opposer successivement des éléments qui retardent d'autant la destruction finale du vitrage. Dans le cas d'un assemblage comprenant plusieurs couches de matériau intumescent à base de phosphates, la difficulté peut venir de l'insuffisance de résistance au fluage aux températures précédant l'expansion. En effet, si à l'épreuve du feu le choc thermique permet d'expanser convenablement la première couche intumescente, les couches suivantes, " protégées " par cette première barrière thermique, montent plus lentement en température. Si le matériau intumescent ne résiste pas suffisamment au fluage à chaud, les couches ultérieures ne sont pas en mesure d'intervenir de façon satisfaisante.

Les inventeurs se sont donc efforcés de trouver des matériaux intumescents améliorés qui présentent une température de transformation de la mousse très élevée, et qui, simultanément, résistent au fluage aux températures intermédiaires qui précèdent la formation de la mousse.

Les inventeurs ont montré que des matériaux intumescents destinés à entrer dans la composition de vitrages coupe-feu, à base de phosphates et comprenant des additifs appropriés pouvaient répondre à cet objectif. Les matériaux selon l'invention contiennent comme additif une poudre très fine de silice pyrogénée ou d'un mélange de silice pyrogénée et d'alumine.

Les inventeurs ont en particulier montré l'intérêt de l'incorporation de ces silices pyrogénées éventuellement mélangées à de l'alumine pour modifier les propriétés des matériaux intumescents formés d'hydrogénophosphates de magnésium, de calcium ou d'aluminium, hydratés tels que décrits dans la publication précitée.

Des poudres de silice pyrogénée, ou de mélange de silice pyrogénée et d'alumine, sont commercialisées, en particulier, comme fluidifiants de poudres, comme charge dans des matériaux plastiques ou pour servir d'épaississants dans des produits variés tels que les peintures, les produits cosmétiques etc.

L'utilisation d'agents épaississants dans des matériaux intumescents pour en modifier les propriétés rhéologiques, a déjà été proposée. Pour conserver le caractère transparent des vitrages il semblait alors nécessaire de choisir des produits qui, non seulement soient compatibles avec les autres constituants du matériau, mais encore soient solubles dans ce matériau.

Le choix de produits adéquats est d'autant plus délicat que les matériaux à base de phosphates sont très agressifs. Les phosphates alcalins conduisent à des compositions à pH très acides, incompatibles avec les agents épaississants les plus usuels. Les agents épaississants proposés antérieurement pour ces couches intumescentes étaient par exemple les hydroxyéthylcelluloses, les alcools polyvinyliques, les gommes naturelles etc. Ils se sont par ailleurs avérés mal appropriés aux conditions d'utilisation effectives des produits considérés. En particulier ils ne favorisent pas la formation de la mousse qui détermine les propriétés essentielles des vitrages dans le rôle de coupe-feu.

Les inventeurs ont montré que l'incorporation de silice pyrogénée ou d'un mélange de silice pyrogénée et d'alumine, permettait de modifier les propriétés rhéologiques des matériaux intumescents des vitrages coupe-feu présentant des températures élevées d'effondrement thermique, par l'utilisation de produits épaississants non solubles, résistant bien aux conditions de pH, et dont la mise en oeuvre adéquate conduit à des couches intumescentes répondant aussi aux exigences optiques: transparence, absence de bulles, de cristaux, et de façon générale de tout défaut préjudiciable aux qualités du vitrage final.

Les silices pyrogénées sont constituées de particules de dimensions très petites. Leur granulométrie moyenne, selon la variété, se situe entre 7 et 40 nanomètres. La présence de groupements hydroxyles à leur surface leur confère un caractère hydrophile marqué. Les particules de silice pyrogénée ne sont pas altérées en milieu fortement acide. L'introduction de cet additif dans les compositions selon l'invention conduit à la dispersion des particules dans le matériau intumescent, sans dissolution dans celui-ci.

La quantité de silice pyrogénée introduite est avantageusement comprise entre 1 et 10% en poids de la composition, et de préférence entre 2 et 6%.

Pour diverses raisons, il est préférable d'introduire la quantité efficace la plus faible possible. La présence des particules en suspension entraîne une certaine diffusion de la lumière. Il est donc souhaitable de limiter la quantité de silice. Par ailleurs, pour obtenir l'effet de gel résistant au fluage, une quantité minimum de silice est bien évidemment nécessaire. Les proportions les plus adéquates doivent être déterminées au cas par cas, en tenant compte des multiples facteurs intervenant, et notamment de la quantité d'eau de la composition produite.

Pour les applications concernées, la teneur en eau du matériau intumescent est fixée pour répondre à diverses exigences parfois contradictoires.

En premier lieu, la teneur en eau doit assurer convenablement la formation de la mousse lorsque le vitrage est exposé au feu. Pour cela il faut à l'évidence une certaine quantité d'eau qui en s'évaporant va permettre l'expansion du matériau. Pour que la mousse offre une bonne résistance à la convection et au rayonnement, il est nécessaire qu'elle soit formée d'une grande quantité de pores distribués de façon homogène. L'expérience montre que pour avoir une bonne expansion, la quantité d'eau doit être choisie de façon précise. Il semble que pour une quantité d'eau trop importante, les bulles qui apparaissent initialement en grand nombre lors de l'expansion, grossissent trop, et donnent lieu à une coalescence désordonnée. Le résultat est une mousse dont les pores sont de dimension très irrégulière, et qui offre une résistance thermique moindre.

En second lieu, la teneur en eau influe de manière importante sur la stabilité des propriétés optiques et mécaniques de la couche intumescente. Plus la teneur est faible, plus le risque de formation de cristaux est grand. Une très faible teneur en eau peut aussi conduire à des défauts de vieillissement dans la couche. Il peut apparaître des crevasses, des fissures, au cours du temps. A l'opposé, une forte quantité d'eau évite la formation de cristaux, mais, comme nous le verrons plus loin, favorise l'augmentation de la lumière diffusée par les particules de silice.

La teneur en eau intervient aussi dans les conditions dans lesquelles s'effectue la préparation de la couche intumescente. Là encore il faut satisfaire à des conditions contradictoires. La préparation du matériau et sa mise en forme sont facilitées par une forte teneur en eau, qui se traduit aussi par une faible viscosité. En particulier, le matériau étant fluide, le vitrage peut être produit en coulant le matériau directement entre les feuilles de verre, ce qui permet de faire l'économie de la formation d'une feuille de matériau intumescent, et de l'assemblage ultérieur de celle-ci avec les feuilles de verre. Mais si la fluidité initiale présente les avantages que l'on vient d'indiquer, in fine, le matériau doit se figer en un gel qui est d'autant plus difficile à atteindre que la teneur en eau de départ est plus élevée. Si la teneur en eau du matériau est trop élevée par exemple en raison des conditions que commande sa préparation, on s'expose à la nécessité de procéder à une étape de séchage, plus ou moins longue et délicate, pour parvenir aux degrés d'hydratation et de fermeté du gel souhaités. Dans toute la mesure du possible on s'efforce de préparer une composition de matériau intumescent qui ne nécessite pas de séchage ou dont l'étape de séchage soit aussi limitée que possible. Nous verrons dans les exemples de manière plus précise comment orienter les choix permettant de satisfaire ces différentes exigences.

De façon générale la quantité d'eau incluse dans le matériau intumescent du vitrage n'est pas inférieure à 18%, et pas supérieure à 40% pour satisfaire aux conditions d'expansion conduisant à la formation d'une mousse bien homogène. Pour que la couche intumescente ne présente pratiquement pas de diffusion de la lumière (de préférence moins de 1%), sans avoir recours aux moyens éventuels permettant de corriger ce qui apparaît comme un défaut et dont il est question plus loin, la teneur en eau est avantageusement au plus égale à environ 35%, et de préférence 30%. Enfin, pour conduire la composition dans un état de fluidité qui permette de la couler commodément entre des feuilles de verre, la teneur en eau est avantageusement d'au moins 30%. Il est par conséquent difficile de satisfaire à l'ensemble des conditions simultanément sans avoir recours à d'autres moyens objet également de l'invention.

L'introduction de silice pyrogénée selon l'invention, comme indiqué précédemment, s'accompagne d'une dispersion des particules qui conduit à une certaine diffusion de la lumière. Même si cette diffusion reste limitée, il est préférable pour améliorer la qualité optique des vitrages, de la réduire encore, voire de la supprimer complètement. Dans tous les cas, pour donner satisfaction, les vitrages transparents selon l'invention ne doivent pas présenter une diffusion totale supérieure à 3%, et de préférence cette diffusion doit être au plus égale à 1%.

Nous avons indiqué qu'une faible teneur en eau était préférable pour limiter la diffusion. Les inventeurs ont encore montré qu'il était possible de faire disparaître la diffusion par un ajustement de la teneur en eau. La raison en est la suivante. Les particules de silice introduites ont un indice de réfraction légèrement inférieur à 1,5. Les compositions de base de la solution destinée à former la couche intumescente, aux teneurs en eau correspondant aux modes de préparation décrits notamment dans la demande WO en référence, présentent normalement des indices de réfraction différents de ceux des particules. Ces compositions présentent normalement un indice plus petit de l'ordre de 1,4. La différence entre les indices est la cause de la diffusion. Les inventeurs ont montré qu'il était possible de modifier l'indice de ces compositions, jusqu'à atteindre celui des particules, en changeant la teneur en eau. Une réduction de la teneur en eau, comme indiqué dans les exemples, permet un accroissement de l'indice, le cas échéant allant jusqu'à égaler celui des particules.

Toujours selon l'invention, il est possible, sans changer la teneur en eau, de réduire la diffusion par l'introduction dans la composition d'additifs permettant de modifier l'indice de réfraction de la composition. Le choix de ces additifs et de leur teneur dans la composition, vise, comme précédemment, à conduire la solution à un indice qui soit aussi voisin que possible de celui de la silice des particules.

De façon générale des additifs permettant de corriger l'indice de réfraction sont des produits miscibles à la solution de base et dont l'indice propre est différent de celui de la solution. Bien entendu les additifs ne doivent pas influer de façon négative sur les propriétés de la couche intumescente.

Pour les compositions à base de phosphates très acides les additifs correcteurs de l'indice doivent être stables dans ce milieu. Ils doivent avoir un indice supérieur à celui de la composition de base, et de préférence même supérieur à celui de la silice pyrogénée. Des candidats sont par exemple les composés suivants : l'acéthyl-4-morpholine (n 1,483), le sulfonale (n 1,484), l'alcool furfurylique (n 1,4845), l'(amino-2-éthylamino)-2-éthanol (n 1,4861), l'éthyl pyridinecarboxylate-3 (n 1,504), le (pipérazinyl-1-)-2-éthanol (n 1,5052), l'acide phényl-3-propionique (n 1,5106), l'acide phényl-2-butyrique (n 1,515), la N-méthylbenzylamine (n 1,5235), le phényl-1-éthanol (n 1,5265), le (pyridyl-2)-2-éthanol (n 1,5368), l'alcool benzylique (n 1,5396), l'allyl-2-phénol (n 1,544), le chloro-2-phénol (n 1,5579), l'anilino-2-éthanol (n 1,5593), le chloro-2-phénol (n 1,5793). Des additifs préférés sont la glycérine et le diméthylsulfoxyde (DMSO). Ces composés peuvent représenter jusqu'à 15% en poids de l'ensemble du matériau de la couche intumescente, mais de préférence moins de 10%.

Les matériaux de base constituant la couche intumescente sont des phosphates de magnésium, de calcium ou d'aluminium, avec un rapport P/Mg (ou Ca ou Al) supérieur à 2. Pour les valeurs de ce rapport inférieures à la limite indiquée, le matériau n'est plus suffisamment transparent. Il prend une apparence laiteuse qui n'est pas ordinairement souhaitée pour les vitrages, et qui est due à la précipitation de phosphates insolubles lorsque le milieu n'est pas suffisamment acide.

Dans le produit final la couche intumescente doit conserver ses propriétés notamment de transparence, aussi longtemps que le vitrage n'est pas soumis à l'épreuve du feu. Il est aussi nécessaire que, dans les conditions ambiantes usuelles, le gel intumescent ne développe pas de cristallisation gênante ou ne laisse apparaître des bulles, ou fissures, en quantité susceptible de modifier son apparence de façon rédhibitoire. Fonction notamment de la teneur en eau du gel, il peut être avantageux d'ajouter à la composition un sel ou de l'hydroxyde d'aluminium. La présence de ces composés, en particulier des sels AlCl₃ ou AlNO₃, prévient ou retarde considérablement la formation de cristaux dans la couche intumescente incorporée dans le vitrage. Les proportions préférées de ce composé additionnel d'aluminium sont avantageusement telles que le rapport atomique Al/Mg soit compris entre 0,05 et 0,4.

La préparation de la couche intumescente entrant dans la constitution des vitrages selon l'invention est présentée de manière détaillée dans la suite de la description concernant des exemples de réalisation.

Les solutions d'essai sont formées de dihydrogénophosphate de magnésium hydraté. La solution est additionnée selon le cas d'un constituant d'aluminium. Pour former la solution de base on utilise une solution aqueuse d'acide phosphorique à 85%. On ajoute de l'hydroxycarbonate de magnésium tétrahydraté (4MgCO₃.Mg(OH)₂.4H₂O).

Le rapport molaire P/Mg est toujours supérieur à 2. Pour des valeurs inférieures, la solution donne lieu à la formation de MgHPO₄.3H₂O, peu soluble, qui précipite. Une composition de base typique est constituée avec un rapport P/Mg de 2,24. Partant des composés indiqués la solution préparée renferme 57% d'eau. Son pH est d'environ 1,6 à 1,7.

La dissolution de l'hydroxycarbonate de magnésium est faite sous agitation intense. La dissolution est lente. Elle est favorisée, de façon limitée, par un accroissement de température. Une fois la dissolution achevée, la solution est filtrée pour éliminer les particules non dissoutes ou les cristaux restant qui constitueraient autant de défauts dans la couche finale.

Pour conduire aux diverses concentrations en eau faisant l'objet de ces essais, la composition de base, préalablement formée en gel, est séchée en étuve ventilée. Le séchage, comme il est connu, peut aussi être réalisé dans une enceinte de chauffage par micro-ondes. Dans la pratique de ces essais, pour les compositions selon l'invention renfermant de la silice, la formation du gel précède le séchage qui modifie la concentration en eau. Cette façon de procéder évite la formation d'irrégularité dans la structure du gel final, irrégularités telles que des plis, des grains ou des fissures, défauts que l'on observe lorsque dans la suite des opérations le séchage précède la gélification.

Les difficultés de réalisation des opérations de séchage sont bien connues. Il s'agit d'évacuer une partie de l'eau de la couche intumescente en formation, en conservant au produit une parfaite homogénéité. Il faut en particulier au cours de ce traitement, prévenir la formation de bulles ou de cristaux, et pour cela un séchage progressif en étuve ventilée est préféré. Le séchage à partir d'un gel est nécessairement lent, notamment pour éviter la formation d'une " peau " à la surface au contact avec l'atmosphère de l'étuve de séchage. Cette opération de séchage, très contraignante, est aussi réduite que possible, voire supprimée dans la production industrielle des produits selon l'invention. Mais pour répondre à la nécessité de déterminer le comportement des produits étudiés dans des conditions variées, ce type de séchage a été utilisé pour les besoins de ces essais.

Sans addition de silice pyrogénée le séchage nécessaire pour constituer une couche intumescente adéquate, peut être important. Sans silice, pour avoir une couche qui forme une mousse adéquate, l'expérience montre qu'il faut une teneur en eau qui se situe entre 20 et 30% en poids de la couche. La difficulté pour ces valeurs, en dehors de la longueur du traitement, est de parvenir à une couche intumescente bien homogène et qui garde la qualité optique souhaitée. L'addition de silice pyrogénée permet de travailler avec des produits renfermant des teneurs en eau sensiblement plus élevées, et donc de s'affranchir, au moins en partie de ces difficultés.

L'addition de silice est effectuée sur la solution de phosphates préparée et filtrée comme indiqué ci-dessus. L'incorporation de la poudre de silice dans la solution nécessite une agitation vigoureuse, la tendance des particules étant de former des amas plus ou moins volumineux. La dispersion parfaitement homogène des particules est d'autant plus difficile que la solution est moins riche en eau, et donc plus visqueuse. Un excès de silice par rapport à la quantité utile est donc non seulement superflu, mais encore peut compliquer l'obtention d'une composition homogène.

Pour les essais, la silice utilisée est celle commercialisée par la société Degussa sous le nom "Aerosil 200". Il s'agit d'une poudre dont les particules ont une granulométrie moyenne de 12 nanomètres.

La quantité de poudre introduite dans la solution pour parvenir à un gel dépend de la teneur en eau. La nature de la poudre, et la façon dont elle intervient dans la modification de la solution font que, passée une certaine quantité relativement peu élevée, l'addition de silice n'ajoute rien aux caractéristiques rhéologiques de la composition. Pour les essais, la silice ajoutée représente 3, 4 ou 5% en poids du matériau intumescent.

La quantité de silice nécessaire, pour conduire à un gel convenable, croît en première approximation avec la teneur en eau du matériau intumescent. Ainsi il est possible d'obtenir un gel en 24 heures à partir d'une solution à 57% d'eau, en ajoutant 5% en poids de silice. Pour des proportions moindres de silice, par exemple 4%, avec la même solution de départ, on n'obtient pas de gel même après 7 jours de repos. Pour une solution à 37,5% d'eau, un ajout de 4% de silice suffit pour former un gel en moins de 24 heures.

Les indications précédentes font état de ce que la formation du gel n'est pas instantanée, ce qui tient à la nature des constituants, et à leur façon de réagir les uns avec les autres. Les liaisons s'organisent lentement au sein de la composition jusqu'à atteindre l'équilibre de structure correspondant au geL

Les compositions préparées sont introduites dans des cellules d'essai reproduisant les conditions des vitrages. Les cellules sont constituées de deux feuilles de verre de 200x200mm, entre lesquelles se situe la couche intumescente.

Les gels constituant les couches intumescentes renfermant différentes proportions d'eau sont d'abord essayées pour leur tenue au fluage aux températures de 50 et 80°C. Les cellules étant mises en position verticale on observe le comportement de la couche intumescente de 2mm d'épaisseur aux températures indiquées. Les essais ont été effectués avec des compositions renfermant 35, 38,5 et 42% d'eau, et 4 et 5% de silice. Aucun fluage n'est observé après 24 heures aux températures indiquées. Par comparaison un gel de même composition, mais sans silice, ne peut être maintenu dans ces conditions dans la cellule. Le fluage de la couche intumescente sans silice apparaît même pour un matériau dont la teneur en eau est inférieure à celle des produits selon l'invention faisant l'objet de cet essai.

Les matériaux selon l'invention soumis au cycle de l'épreuve au feu ne s'altèrent donc pas au début du cycle. ils restent en position et peuvent s'expanser convenablement pour former une mousse isolante. La poursuite du cycle a montré que la mousse formée par expansion résiste jusqu'à des températures supérieures à 700°C. L'effondrement de la mousse se situe entre 700 et 900°C. La fusion du matériau se produit aux environ de 1100°C.

L'addition de silice pyrogénée, autrement dit de particules solides dans la solution de phosphates à 57% d'eau préparée comme il a été indiqué plus haut, entraîne une certaine diffusion de la lumière formant un halo bleuté. Si l'on réduit la teneur en eau, l'indice de réfraction de la composition du matériau intumescent croît. Pour éliminer ce halo il convient de porter la teneur en eau à un niveau tel que l'indice de réfraction rejoigne celui des particules de silice. Pour l'Aerosil 200, l'indice de réfraction est de 1,46. Les mesures d'indice en fonction de la teneur en eau montrent que la composition atteint cet indice pour une teneur en eau de l'ordre de 30%. Pour cette valeur la composition du matériau est d'indice de réfraction homogène. Il n'y a plus diffusion de la lumière.

Il va de soi que la teneur en eau permettant d'ajuster les indices de la solution et de la silice, est fonction de la composition précise de la solution. Même si les variations d'indice sont relativement peu importantes en fonction de la composition, elles conduisent à des teneurs en eau bien différentes pour "l'égalisation des indices". L'addition de chlorure d'aluminium par exemple, élève l'indice de la composition et permet d'atteindre l'indice de la silice avec une teneur en eau plus élevée toutes choses égales par ailleurs. A l'inverse un accroissement du rapport P/Mg tend à réduire l'indice de la solution. A titre indicatif pour un rapport P/Mg égal à 3, (le rapport de la solution de référence étant 2,24), l'indice pour 30% d'eau est d'environ 1,44. Pour atteindre l'indice de la silice il faudrait pouvoir préparer une composition comportant moins de 20% d'eau. Tant du point de vue de la possibilité de préparer cette composition par séchage, que des qualités de formation de mousse isolante de la couche résultante, cette solution n'est pas préférée.

Dans cette dernière situation il est possible d'ajuster l'indice de la composition au moyen d'additifs comme la glycérine, ou le DMSO, de telle sorte que l'on retrouve un indice proche de celui de la silice. Maintenus dans des proportions qui ne sont pas supérieures à 10%, ces composés, et en particulier la glycérine, ne modifient pas de façon sensible les qualités du matériau intumescent. Il est souhaitable de limiter la teneur à la valeur indiquée. Pour des teneurs supérieures, la carbonisation de ces composés organiques lors d'une épreuve au feu pourrait accroître la conduction thermique de la mousse formée et diminuer en conséquence la résistance du vitrage.

A titre indicatif, une solution de phosphates (P/Mg 2,24 et Al/Mg 0,3) contenant 4% de silice et 37% d'eau, voit son indice de réfraction passer de 1,44 à près de 1,45 par addition de 10% de glycérine. La même composition à 40% d'eau passe de 1,435 à 1,443 par addition de 10% de DMSO.

L'accroissement d'indice se traduit de manière directe sur la qualité optique de la couche intumescente. Même si les indices de la silice et de la solution ne sont pas identiques, le rapprochement permet de réduire sensiblement la diffusion mesurée. Pour les exemples de compositions indiquées ci-dessus, la couche sans glycérine présente une diffusion de 1,18%. La même couche contenant la glycérine ne présente qu'une diffusion de 0,87%. En combinant les actions de la teneur en eau et des additifs il est donc possible de corriger l'effet de diffusion induit par la présence de la silice jusqu'à retrouver des valeurs acceptables.

Les compositions préparées selon les indications précédentes ont aussi fait l'objet d'analyses de vieillissement. Les matériaux doivent conserver les propriétés notamment de transparence et d'absence de défauts optiques sur de très longues périodes d'utilisation. Le point le plus sensible à ce sujet est le risque de formation de cristaux dans le matériau transparent.

Les inventeurs ont pu vérifier que la présence de chlorure ou de nitrate d'aluminium dans la composition permet de prévenir ou de réduire considérablement la formation de cristaux. L'addition du composé d'aluminium est effectuée de préférence avant l'introduction de la silice, et après la filtration de la solution de phosphates.

Les produits préparés pour ces essais contiennent une quantité d'ion aluminium telle que le rapport atomique Al/Mg soit respectivement de 0,1, 0,2 et 0,3. Les couches ont une composition comportant 43% d'eau et 5% de silice. Le rapport P/Mg est toujours de 2,24. Les échantillons d'essai sont observés 24 heures et 7 jours après préparation. Le produit à faible teneur en aluminium(Al/Mg 0,1) présente dès le premier jour un nombre important de cristaux. Après une semaine le même produit est colonisé par les cristaux. Le second échantillon (Al/Mg 0,2) ne montre qu'un faible nombre de cristaux à un jour, et un nombre plus important après une semaine. Enfin le dernier échantillon (Al/Mg 0,3) ne contient aucun défaut après 24 heures et un nombre tout à fait acceptable de cristaux décelables après un long vieillissement. La présence du composé d'aluminium permet donc bien de maîtriser l'apparition de défauts de cristallisation indésirables.

Les compositions des matériaux intumescents selon l'invention présentent encore l'avantage le cas échéant, comme cela a été indiqué précédemment, de faciliter la production des vitrages en permettant l'introduction directe de la composition entre les feuilles de verre du vitrage. En choisissant convenablement les constituants de cette composition et leurs proportions, il est possible de préparer une solution présentant les caractéristiques rhéologiques qui, d'une part, permettent l'introduction de la composition sous forme suffisamment fluide pour qu'elle s'écoule librement et occupe l'espace entre les feuilles de verre, et, d'autre part, conduisent en quelques heures à un gel bien stable et présentant toutes les caractéristiques thermiques et optiques requises.

Pour les compositions indiquées précédemment (P/Mg 2,24) la teneur en eau la plus faible qui permet de couler entre les feuilles est d'environ 35%. Les compositions ayant au moins cette teneur en eau et qui peuvent être gélifiées par adjonction de silice peuvent conduire à la formation de vitrages sans autre traitement de séchage. Les produits selon l'invention d'une part présentent l'intérêt d'une meilleure résistance thermique, et, d'autre part, pour certains d'entre eux au moins, ils peuvent être produits dans des conditions plus faciles à mettre en oeuvre.

Les vitrages selon l'invention peuvent être réalisés avec tous les types de feuilles de verre utilisées pour ces applications. Il peut s'agir de feuilles de verre sodo-calciques les plus usuelles. Il peut aussi s'agir de feuille de borosilicates ou même vitrocéramiques, dont les qualités de faible dilatation thermique constituent un avantage souvent recherché. Le verre est le plus fréquemment blanc, mais il peut aussi être coloré dans la masse. Les performances thermiques des verres peuvent encore être améliorées par l'utilisation de couches minces présentant en particulier des propriétés réfléchissantes. Dans un même vitrage, des couches de gel silicaté peuvent alterner avec des couches de gel phosphaté.

La mise en oeuvre des vitrages selon l'invention permet tous les types de montages usuels. Ils peuvent être utilisés en vitrage simples ou multiples, dans des ensembles mobiles (portes, fenêtres) ou de manière fixe (éléments de parois, façades...), et de façon générale dans toutes les applications traditionnelles des vitrages coupe-feu.

## Revendications

1. Vitrage coupe-feu transparent comprenant au moins deux feuilles de verre et une couche de matériau intumescent contenant un composé à base de phosphates, couche située entre ces deux feuilles de verre, dans lequel le matériau intumescent comprend de la silice pyrogénée ou un mélange de silice pyrogénée et d'alumine.

2. Vitrage selon la revendication 1 dans lequel le matériau intumescent est à base d'hydrogénophosphates de magnésium, de calcium ou d'aluminium,

3. Vitrage selon la revendication 1 ou la revendication 2, dans lequel la silice pyrogénée est constituée de particules dont la granulométrie moyenne est comprise entre 7 et 40 nanomètres.

4. Vitrage selon l'une des revendications précédentes dans lequel la quantité de silice pyrogénée dans la couche intumescente est comprise entre 1 et 10% en poids de la composition constituant cette couche.

5. Vitrage selon l'une des revendications précédentes dans lequel la quantité de silice pyrogénée dans la couche intumescente est comprise entre 2 et 6% en poids de la composition constituant cette couche.

6. Vitrage selon l'une des revendications précédentes dans lequel la composition de la couche intumescente comprend de 18 à 40% en poids d'eau.

7. Vitrage selon l'une des revendications précédentes dans lequel la composition de la couche intumescente comprend de 30 à 35% en poids d'eau.

8. Vitrage selon la revendication 4, 5 ou 6 dans lequel la teneur en eau est ajustée de manière à porter l'indice de réfraction de la composition à une valeur voisine de celle de la silice pyrogénée qu'elle contient.

9. Vitrage selon l'une des revendications précédentes dans lequel l'indice de la couche intumescente est rapproché de celui de la silice pyrogénée par addition de glycérine ou de diméthylsulfoxyde, dans une proportion qui n'excède pas 15% en poids de la composition de la couche intumescente.

10. Vitrage selon l'une des revendications 2 à 9 dans lequel la composition de la couche intumescente présente un rapport atomique P/Mg (ou Ca, ou Al) supérieur à 2.

11. Vitrage selon l'une des revendications précédentes dans lequel la composition de la couche intumescente comprend en outre un sel ou de l'hydroxyde d'aluminium.

12. Vitrage selon la revendication 11 dans lequel l'aluminium est présent en quantité telle que le rapport atomique Al/Mg soit compris entre 0,05 et 0.4

13. Vitrage selon l'une des revendications précédentes dans lequel la composition de la couche intumescente comprend une teneur en silice pyrogénée et une teneur en eau telles que, lors de la préparation de la composition, celle-ci présente une fluidité permettant de l'introduire entre les feuilles du vitrage, la composition formant un gel après environ 24 heures.

## Claims

1. Transparent fire resistant glazing comprising at least two sheets of glass and a layer of intumescent material containing a phosphate-based component, said layer being disposed between these two sheets of glass, wherein the intumescent material contains pyrogenic silica or a mixture of pyrogenic silica and aluminium oxide.

2. Glazing according to Claim 1, wherein the intumescent material is based on magnesium, calcium or aluminium hydrogen phosphates.

3. Glazing according to Claim 1 or Claim 2, wherein the pyrogenic silica is formed from particles with an average grain size in the range of between 7 and 40 nanometres.

4. Glazing according to one of the preceding claims, wherein the quantity of pyrogenic silica in the intumescent layer is in the range of between 1 and 10% by weight of the composition forming this layer.

5. Glazing according to one of the preceding claims, wherein the quantity of pyrogenic silica in the intumescent layer is in the range of between 2 and 6% by weight of the composition forming this layer.

6. Glazing according to one of the preceding claims, wherein the composition of the intumescent layer contains 18 to 40% by weight of water.

7. Glazing according to one of the preceding claims, wherein the composition of the intumescent layer contains 30 to 35% by weight of water.

8. Glazing according to Claim 4, 5 or 6, wherein the water content is adjusted in order to bring the refraction index of the composition to a value close to that of the pyrogenic silica it contains.

9. Glazing according to one of the preceding claims, wherein the index of the intumescent layer is brought close to that of the pyrogenic silica by adding glycerol or dimethylsulphoxide in a proportion that does not exceed 15% by weight of the composition of the intumescent layer.

10. Glazing according to one of Claims 2 to 9, wherein the composition of the intumescent layer has an atomic ratio of P/Mg (or Ca or Al) greater than 2.

11. Glazing according to one of the preceding claims, wherein the composition of the intumescent layer additionally contains an aluminium salt or aluminium hydroxide.

12. Glazing according to Claim 11, wherein the aluminium is present in a quantity such that the atomic ratio of Al/Mg is in the range of between 0.05 and 0.4.

13. Glazing according to one of the preceding claims, wherein the composition of the intumescent layer contains a pyrogenic silica content and a water content such that during the preparation of the composition, this has a fluidity allowing it to be inserted between the sheets of glass, the composition forming a gel after about 24 hours

## Patentansprüche

1. Transparente Brandschutzverglasung, umfassend mindestens zwei Glasscheiben und eine Schicht aus einem aufschäumbaren Material, das eine Verbindung auf Phosphatbasis enthält, wobei die Schicht zwischen den beiden Glasscheiben angeordnet ist und wobei das aufschäumbare Material pyrogenes Siliziumdioxid oder ein Gemisch aus pyrogenem Siliziumdioxid und Aluminiumdioxid enthält.

2. Verglasung nach Anspruch 1, wobei das aufschäumbare Material auf Magnesium-, Calcium- oder Aluminiumhydrogenphosphat basiert.

3. Verglasung nach Anspruch 1oder 2, wobei das pyrogene Siliziumdioxid aus Partikeln aufgebaut ist, deren mittlere Partikelgröße einen Bereich zwischen 7 und 40 Nanometem umfaßt.

4. Verglasung nach einem der vorhergehenden Ansprüche, wobei die Menge an pyrogenem Siliziumdioxid in der aufschäumbaren Schicht einen Bereich zwischen 1 bis 10 Gewichtsprozent, bezogen auf die Zusammensetzung, die diese Schicht bildet, umfasst.

5. Verglasung nach einem der vorhergehenden Ansprüche, wobei die Menge an pyrogenem Siliziumdioxid in der aufschäumbaren Schicht einen Bereich zwischen 2 bis 6 Gewichtsprozent, bezogen auf die Zusammensetzung, die diese Schicht bildet, umfasst.

6. Verglasung nach einem der vorhergehenden Ansprüche, wobei die Zusammensetzung der aufschäumbaren Schicht 18 bis 40 Gewichtsprozent Wasser umfasst.

7. Verglasung nach einem der vorhergehenden Ansprüche, wobei die Zusammensetzung der aufschäumbaren Schicht 30 bis 35 Gewichtsprozent Wasser umfasst.

8. Verglasung nach Anspruch 4, 5 oder 6, wobei der Wassergehalt so eingestellt ist, dass er den Brechungsindex der Zusammensetzung auf einen Wert bringt, der demjenigen des pyrogenen Siliziumdioxids ähnlich ist, das in der Zusammensetzung enthalten ist.

9. Verglasung nach einem der vorhergehenden Ansprüche, wobei der Brechungsindex der aufschäumbaren Schicht an denjenigen des pyrogenen Siliziumdioxids durch Zugabe von Glyzerin oder Dimethylsulfoxid angenähert wird, wobei diese jeweils in einem derartigen Verhältnis zugegeben werden, das 15 Gewichtsprozent der Zusammensetzung der aufschäumbaren Schicht nicht überschreitet.

10. Verglasung nach einem der Ansprüche 2 bis 9, wobei die Zusammensetzung der aufschäumbaren Schicht ein atomares Verhältnis von P/Mg (oder Ca oder Al) von mehr als 2 aufweist.

11. Verglasung nach einem der vorhergehenden Ansprüche, wobei die Zusammensetzung der aufschäumbaren Schicht unter anderem ein Aluminiumsalz oder Aluminiumhydroxid enthält.

12. Verglasung nach Anspruch 11, wobei das Aluminium in einer derartigen Menge vorliegt, daß das atomare Verhältnis Al/Mg den Bereich von 0,05 bis 0,4 umfaßt.

13. Verglasung nach einem der vorhergehenden Ansprüche, wobei die Zusammensetzung der aufschäumbaren Schicht einen Gehalt an pyrogenem Siliziumdioxid und an Wasser umfaßt, so daß die Zusammensetzung bei ihrer Herstellung eine Fluidität aufweist, daß sie zwischen die Scheiben der Verglasung eingebracht werden kann und wobei die Zusammensetzung nach ungefähr 24 Stunden ein Gel bildet.
